(19)

Europäisches
Patentamt
European
Patent Office
Office européen
des brevets

(11) **EP 2 431 716 A1**

(12) **EUROPEAN PATENT APPLICATION**

(43) Date of publication:
**21.03.2012 Bulletin 2012/12**

(51) Int Cl.:
***G01F 1/74*** *(2006.01)*

(21) Application number: **10290364.8**

(22) Date of filing: **30.06.2010**

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**
Designated Extension States:
**BA ME RS**

(71) Applicants:
• **Services Petroliers Schlumberger**
**75007 Paris (FR)**
Designated Contracting States:
**FR**
• **Schlumberger Technology B.V.**
**2514 JG The Hague (NL)**
Designated Contracting States:
**AL BG CZ DE DK GR HU IE IT LT MK NO PL RO
SI SK SM TR**
• **Schlumberger Holdings Limited (SHL)**
**Tortola (VG)**
Designated Contracting States:
**GB NL**
• **Prad Research And Development Limited**
**Tortola (VG)**
Designated Contracting States:
**AT BE CH CY EE ES FI HR IS LI LU LV MC MT PT SE**

(72) Inventors:
• **Lupeau, Alexandre**
**NO-5862 Bergen (NO)**
• **Baker, Andrew**
**NO-5862 Bergen (NO)**

(74) Representative: **Vandermolen, Mathieu**
**Intellectual Property Department**
**Etudes & Productions Schlumberger**
**1, rue Henri Becquerel**
**B.P. 202**
**92142 Clamart Cedex (FR)**

(54) **A multiphase flowmeter and a correction method for such a multiphase flowmeter**

(57)     A flow meter (1) for measuring a flow rate of a multiphase fluid mixture (13) comprising at least one gas phase (40) and one liquid phase (50), the flow meter comprising:
- a pipe section (21) through which the multiphase fluid mixture (13) flows comprising a throat (24) between an upstream part (23) and a downstream part (25) such as to generate a pressure drop between the upstream part (23) and the downstream part (25);
- a fraction measurement device estimating a fractional flow rate for each phase of the multiphase fluid mixture passing at the throat

wherein the flow meter further comprises:
- at least one ultrasonic sensor (35, 36, 37, 38) arranged to estimate a thickness (72) of the liquid phase (50) flowing as a liquid film along a wall of the pipe section (21, 23, 24, 25), said thickness being used to correct the estimated fractional flow rate for each phase when a gas liquid fraction GLF related the multiphase fluid mixture (13) is such that the gas phase (40) flows in a core of the pipe section, and the liquid phase (50) flows along the wall of the pipe as the liquid film.

FIG. 2

**Description**

TECHNICAL FIELD

An aspect of the present invention relates to a flow meter for measuring a flow rate of a multiphase fluid mixture. Another aspect of the invention relates to a method for correcting flow rate measurement related to a multiphase fluid mixture. Such a flow meter and correction method may be used, in particular but not exclusively, in oilfield related applications, for example, to measure a flow rate of a hydrocarbon effluent flowing out of a geological formation into a well that has been drilled for the purpose of hydrocarbon exploration and production.

BACKGROUND OF THE INVENTION

WO 99/10712 describes a flow rate measurement method adapted to oil effluents made up of multiphase fluid mixtures comprising water, oil, and gas. The effluent is passed through a Venturi in which the effluent is subjected to a pressure drop $\Delta P$, a mean value $<\Delta P>$ of the pressure drop is determined over a period $t_1$ corresponding to a frequency $f_1$ that is low relative to the frequency at which gas and liquid alternate in a slug flow regime, a means value $<pm>$ is determined for the density of the fluid mixture at the constriction of the Venturi over said period $t_1$, and a total mass flow rate value $<Q>$ is deduced for the period $t_1$ under consideration from the mean values of pressure drop and of density.

Such multiphase flow rate measurements are accurate when the flow mixture distribution is homogenous. A mixture is considered as homogenous when its several phases are mixed and dispersed enough to consider the behavior of the mixture as an equivalent to a single phase fluid having similar density and properties. Depending on where the multiphase flow meter is installed the incoming multiphase flow mixture is not necessary homogenous. In this case the common practice to homogenize the mixture is to use a flow conditioner upstream the multiphase flow meter. For example, the blind T is typically used as a flow conditioner in association with many multiphase flow meters. When the flow is homogenous the calculation of the flow rate based on the Bernoulli equation is relevant and accurate. It is to be noted that, generally, said calculation assumes that the flow rate of the multiphase fluid mixture is proportional to the pressure loss at the Venturi throat which is proportional to the acceleration of an equivalent single phase like fluid mixture through the Venturi throat.

Flow mixture distribution is related to how gas and liquid are spread within a pipe. The Venturi measuring section is defined between two pressure ports located at an inlet section and at a throat section of the flow meter. The efficiency of a flow conditioner is not always perfect, resulting in a less homogeneous flow mixture in the flow meter. Furthermore the "degree of homogeneity" of the multiphase mixture, its evolution regarding time, and its position inside the measuring section may also vary depending on various parameters like: fluid properties, flow history; flow meter upstream conditions. These variations must remain limited in order to keep applicable a homogeneous based flow modeling approach eventually taking into account some correction.

If the degree of homogeneity of the flow mixture at the inlet or inside the multiphase flow meter becomes too low then a homogenous based flow modeling approach is not relevant anymore. Furthermore, the relation between flow rate and pressure drop within the measuring section of the Venturi cannot be modeled correctly. As a consequence, limitations on the accuracy of such a multiphase flow rate measurements may occur when the multiphase fluid mixture is not sufficiently homogeneous.

Further limitations on the accuracy may occur when a homogenous based flow modeling approach is applied when the amount of one or several phases of the mixture becomes very low. In particular, this may occur when the Gas Volume Fraction (GVF) in the measuring section becomes very high, for example up to 95%. Indeed, in this case a proper flow conditioning of the multiphase fluid mixture is not guaranteed. Generally, some of the liquid phase is transported by the gas stream at the same speed and some of the liquid stick on the pipe wall and moves at a lower velocity. As a consequence, a large variety of liquid distribution can be observed, like annular flow, mist flow or annular mist flow. Furthermore, the liquid flows inside the measuring section at different velocities depending whether it flows in the gas core or on the pipe wall. The split of liquid between the gas core and the pipe wall is impossible to predict with the current instrumentation implemented in the Venturi flow meter. In addition it depends on many different parameters like fluids properties, flow rates, internal geometry and pipe flaws. Thus, the use of conventional homogeneous based flow modeling approach for high gas volume fraction GVF conditions is not possible with these unpredictable gradient of phases and velocities.

SUMMARY OF THE INVENTION

It is an object of the present invention to propose a flow meter and/or a method for measuring a flow rate of a multiphase fluid mixture that overcomes one or more of the limitations of the existing apparatus for measuring the flow rate of the multiphase fluid mixture.

According to one aspect, there is provided a flow meter for measuring a flow rate of a multiphase fluid mixture comprising at least one gas phase and one liquid phase, the flow meter comprising:

- a pipe section through which the multiphase fluid mixture flows comprising a throat between an upstream part and a downstream part such as to generate a pressure drop between the upstream part and the downstream part;

- a fraction measurement device estimating a fractional flow rate for each phase of the multiphase fluid mixture passing at the throat; and

- at least one ultrasonic sensor arranged to estimate a thickness of the liquid phase flowing as a liquid film along a wall of the pipe section, said thickness being used to correct the estimated fractional flow rate for each phase when a gas liquid fraction GLF related the multiphase fluid mixture is such that the gas phase flows in a core of the pipe section, and the liquid phase flows along the wall of the pipe as the liquid film.

At least one ultrasonic sensor may be positioned at the throat.
At least one ultrasonic sensor may be positioned at a position such as to face a zone of the pipe section where the multiphase flow mixture flows according to conditions similar to the ones expected at the throat.
A plurality of ultrasonic sensor may be positioned on a same plane perpendicular to the multiphase fluid mixture flow direction such as to estimate a mean value of the liquid film thickness.
The ultrasonic sensor may be positioned such that ultrasonic waves propagate parallel to a beam of the gamma densitometer.
The ultrasonic sensor may be installed on a face of the pipe section not contacting the multiphase fluid mixture.
The flow meter may further comprise pressure tapings and pressure sensors for measuring the differential pressure of the multiphase fluid mixture between the upstream part and the throat and estimating a total flow rate of the multiphase fluid mixture.
The pipe section may be connected at least on one end to a blind-T pipe section.
The multiphase fluid mixture may be a hydrocarbon effluent comprising gas, oil, and water.
According to another aspect, there is provided a method for measuring a flow rate of a multiphase fluid mixture comprising a gas phase and a liquid phase, the flow rate measuring method comprising:

- generating a pressure drop between an upstream part and a downstream part by letting flow the multiphase fluid mixture in a pipe section having a throat positioned between the upstream part and the downstream part;

- submitting the multiphase fluid mixture to gamma rays, measuring an absorption of the gamma rays by each phase of the multiphase fluid mixture passing at the throat and estimating a fractional flow rate for each phase;

- estimating a thickness of the liquid phase flowing as a liquid film along a wall of the throat using ultrasonic sensors; and

- correcting the estimated fractional flow rate for each phase based on said thickness when a gas liquid fraction GLF of the multiphase fluid mixture is such that the gas phase flows in a core of the pipe section, and the liquid phase flows along the wall of the pipe as the film.

The thickness may be estimated at a position facing a zone of the pipe section where the multiphase flow mixture flows according to conditions similar to the ones expected at the throat.
The thickness may be estimated by a mean value of the liquid film thickness by means of a plurality of ultrasonic sensor positioned on a same plane perpendicular to the multiphase fluid mixture flow direction.
The ultrasonic waves used to estimate the thickness may propagate parallel to a beam of the gamma densitometer.
The method may further comprise measuring the differential pressure of the multiphase fluid mixture between the upstream and downstream parts and estimating a total flow rate of the multiphase fluid mixture.
The apparatus for measuring the flow rate of the multiphase fluid mixture of the invention enables measuring the degree of annularity of a multiphase fluid mixture in the flow meter. Thus, it is possible to correct gas fraction measurements by taking into consideration the size of the liquid film in the pipe section where fraction related measurements are performed, said size being estimated by means of ultrasonic measurements.
Furthermore, the ultrasonic sensors are fully non-intrusive, the ultrasonic signals passing through the wall thickness of the pipe, induces only slight modification of the external pipe structure in order to securely fit the sensors while not introducing any source of fluid leakage.
Other advantages will become apparent from the hereinafter description of the present invention.

BRIEF DESCRIPTION OF THE DRAWINGS

The present invention is illustrated by way of examples and not limited to the accompanying drawings, in which like references indicate similar elements:

- Figure 1 schematically shows an onshore hydrocarbon well location illustrating various examples of deployment of the flow meter of the invention;

- Figure 2 is a cross-section view schematically illustrating an embodiment of the multiphase flow meter of the invention in a situation of high gas volume fraction GVF;

- Figure 3 is a top cross-section view schematically illustrating the throat of a Venturi flow meter according to an embodiment of the invention;

- Figure 4 is a side cross-section view along line 70 of Figure 3;

- Figure 5 is a top cross-section view in the throat of a Venturi flow meter illustrating a theoretical situation of high gas volume fraction GVF with liquid film on the throat wall and droplets in the throat core; and

- Figure 6 schematically illustrates the method for correcting flow rate measurements of the invention.

DETAILED DESCRIPTION OF THE INVENTION

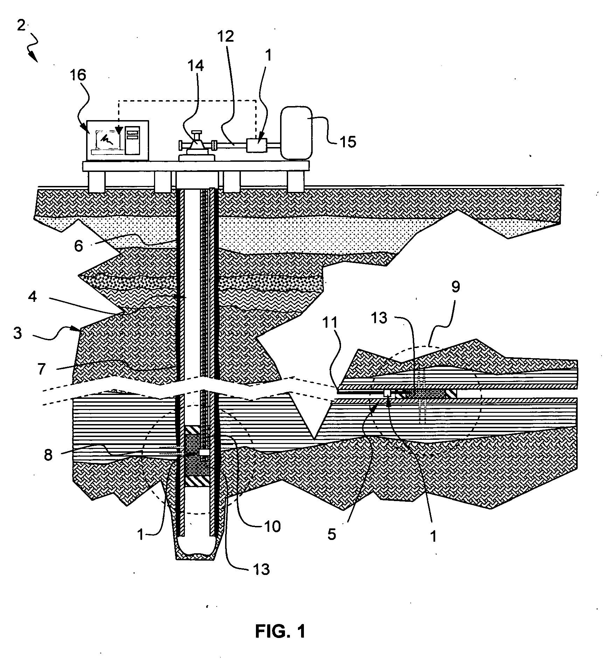

FIG. 1 schematically shows an onshore hydrocarbon well location and equipments 2 above a hydrocarbon geological formation 3 after drilling operation has been carried out, after a drill pipe has been run, and eventually, after cementing, completion and perforation operations have been carried out, and exploitation has begun. The well is beginning producing hydrocarbon, e.g. oil and/or gas. At this stage, the well bore comprises substantially vertical portion 4 and may also comprise horizontal or deviated portion 5. The well bore 4 is either an uncased borehole, or a cased borehole, or a mix of uncased and cased portions.

The cased borehole portion comprises an annulus 6 and a casing 7. The annulus 6 may be filled with cement or an open-hole completion material, for example gravel pack. Downhole, a first 8 and second 9 producing sections of the well typically comprises perforations, production packers and production tubings 10, 11 at a depth corresponding to a reservoir, namely hydrocarbon-bearing zones of the hydrocarbon geological formation 3. A fluid mixture 13 flows out of said zones 8, 9 of the hydrocarbon geological formation 3. The fluid mixture 13 is a multiphase hydrocarbon fluid mixture comprising a plurality of fluid fractions (water, oil, gas) and a plurality of constituting elements (water, various hydrocarbon molecules, various molecules solved in water). The fluid mixture 13 flows downhole through the production tubings 10, 11 and out of the well from a well head 14. The well head 14 is coupled to surface production arrangement 15 by a surface flow line 12. The surface production arrangement 15 may typically comprise a chain of elements connected together, e.g. a pressure reducer, a heat exchanger, a pumping arrangement, a separator, a tank, a burner, etc ... (not shown in details). In one embodiment, one or more multiphase flow meter 1 for measuring at least the flow rate of the multiphase fluid mixture 13 may be installed into the production tubings 10 associated with the first producing section 8, or into the production tubings 11 associated with the second producing section 9 (as represented in FIG. 1) or other sections of the well (not represented in FIG. 1). In another embodiment, one or more multiphase flow meter 1 for measuring at least the flow rate of the multiphase fluid mixture 13 may be installed within the surface flow line 12.

A control and data acquisition arrangement 16 is coupled to the multiphase flow meter 1 of the invention, and/or to other downhole sensors (not shown) and/or to active completion devices like valves (not shown). The control and data acquisition arrangement 16 may be positioned at the surface. The control and data acquisition arrangement 16 may comprise a computer. It may also comprise a satellite link (not shown) to transmit data to a client's office. It may be managed by an operator.

The precise design of the down-hole producing arrangement and surface production/control arrangement is not germane to the present invention, and thus these arrangements are not described in detail herein.

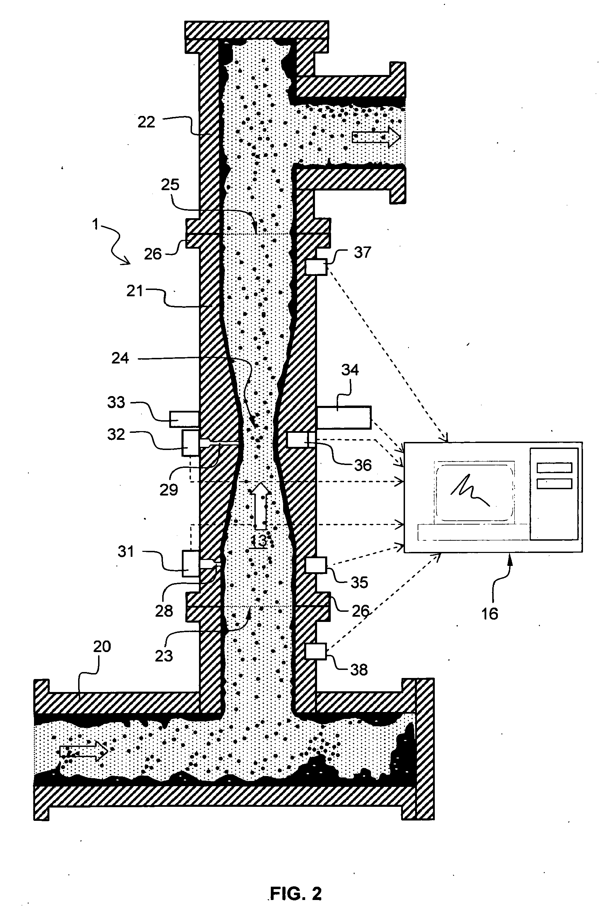

Figure 2 is a cross-section view schematically illustrating an embodiment of the multiphase flow meter 1 of the invention. The multiphase flow meter 1 measures the flow rates of a commingled flow of different phases 13, e.g. gas, oil and water, without separating the phases. The multiphase flow meter performs additional measurements, in particular on the liquid phase.

The multiphase flow meter 1 comprises a pipe section 21 which internal diameter gradually decreases from an upstream part 23 to a throat 24, forming a convergent Venturi, then gradually increases from the throat 24 to a downstream part 25. The convergent Venturi induces a pressure drop between the upstream part 23 and the downstream part 25 encompassing the throat 24. The portion of the pipe around the Venturi throat 24 constitutes the measuring section. The pipe section 21 can be coupled to any flowing line 10, 11, 12 by any appropriate connection arrangement, for example a flange 26 having a bolt-hole pattern and a gasket profile (not shown in details). The multiphase fluid mixture 13 flows through the upstream part 23, the throat 24 and the downstream part 25 of the pipe section 21 as indicated by the arrow.

Further, the pipe section 21 of measuring apparatus 1 may be coupled to a first flow conditioner under the form of a blind T pipe section 20 at the upstream part 23,. The measuring apparatus may also be coupled to a second blind T pipe section 22 at the downstream part 25. The first blind T pipe section enable achieving proper homogenization of the mixture coming at the inlet of the pipe section 21 of measuring apparatus 1. The second blind T pipe section 22 has no role in conditioning the flow mixture in the multiphase flow meter. The various pipe sections 20, 21, 22 may be coupled together by the above mentioned flange 26.

Furthermore, the multiphase flow meter 1 comprises various sensing arrangements to measure various characteristic values of the multiphase fluid mixture 13 flowing into the pipe section 21.

In an embodiment, the sensing arrangement is a Venturi flow meter estimating a total flow rate of the multiphase fluid mixture based on differential pressure measurement. The pipe section 21 is provided with pressure tappings 28, 29. A first pressure tapping 28 is positioned in the upstream part 23. A first pressure sensor 31 is associated with the first pressure tapping 28 for measuring the pressure of the multiphase fluid mixture 13 flowing in the upstream part 23. A second pressure tapping 29 is positioned at the throat 24. A second pressure sensor 32 is associated with the second pressure tapping 29 for measuring the pressure of the multiphase fluid mixture 13 flowing at the throat 24. Thus, the pressure drop of the multiphase fluid mixture between the upstream part and the throat due to the convergent Venturi can be measured.

In another embodiment, the sensing arrangement is a fraction measurement device, for example a gamma densitometer comprising a gamma rays source 33 and a gamma rays detector 34. The gamma densitometer measures absorption of the gamma rays by each phase of the multiphase fluid mixture and estimates a density of the multiphase fluid mixture 13 and a fractional flow rate for each phase. The gamma rays source 33 and the gamma rays detector 34 are diametrically positioned on each opposite sides of the throat 24 or closed to the throat.

The gamma rays source 33 may be a radioisotope Barium 133 source. Such a gamma rays source generates photons which energies are distributed in a spectrum with several peaks. The main peaks have three different energy levels, namely 32 keV, 81 keV and 356 keV. As another example, a known X-Ray tube may be used as a gamma rays source 33.

The gamma rays detector 34 comprises a scintillator crystal (e.g. NaITI) and a photomultiplier. The gamma rays detector 34 measures the count rates (the numbers of photons detected) in the various energy windows corresponding to the attenuated gamma rays having passed through the multiphase fluid mixture 13 at the throat. More precisely, the count rates are measured in the energy windows that are associated to the peaks in the energy spectrum of the gamma photons at 32 keV, 81 keV and 356 keV.

The count rates measurements in the energy windows at 32 keV and 81 keV are mainly sensitive to the fluid fractions of fluid mixture and the constituting elements (composition) due to the photoelectric and Compton effects at these energies. The count rates measurements in the energy window at 356°keV are substantially sensitive to the density of the constituting elements due to the Compton effect only at this energy. Based on these attenuation measurements and calibration measurements, the fractional flow rate for each phase and the density of the multiphase fluid mixture 13 can be estimated. Such an estimation has been described in details in several documents, in particular WO 02/50522 and will not be further described in details herein.

As an alternative to the gamma densitometer, other fraction measurement device may be used like for example microwave based fraction measurement device.

The measuring apparatus 1 may also comprise a temperature sensor (not shown) for measuring the temperature of the multiphase fluid mixture 13.

In another embodiment, both sensing arrangements hereinbefore presented may be combined to estimate the total flow rate of the multiphase fluid mixture, the density of the multiphase fluid mixture and the fractional flow rate for each phase of the multiphase fluid mixture.

Further, the multiphase flow meter 1 comprises at least one ultrasonic sensor 35, 36, 37, 38. Each ultrasonic sensor is used to estimate the thickness of the liquid film flowing along the wall of the pipe sections in a non-intrusive way. The thickness measurements are local, in the sense that only the film thickness of the fluid flowing in front of the ultrasonic sensor can be estimated. The ultrasonic sensors may be piezoelectric transducers working sequentially in emission and reception as known in the art. Various sensors 35, 36, 37 may be installed or inserted on the external side of the wall of the pipe section 21 of the measuring apparatus 1 at different locations, for example close to the upstream part 23, and/or the throat 24, and/or the downstream part 25, respectively. Further, at least another sensor 38 may also be positioned on the external side of the wall of the first blind T pipe section 20, for example close to the location where the pipe section 21 is coupled to the first blind T pipe section 20. Any other position of the sensor facing a zone of the pipe where the multiphase fluid mixture flows according to flow conditions similar to the ones expected at the Venturi throat may be convenient. The ultrasonic sensor may be positioned in blind hole of the external side of the wall of the pipe section. The ultrasonic sensor may be screwed or strapped on the external side of the wall of the pipe section. Each ultrasonic sensor may be positioned such that the ultrasonic vibrations/waves propagates perpendicularly to the multiphase fluid mixture flow direction (depicted as an arrow) or to the wall of the pipe section, or parallel to the beam of the gamma densitometer. Thus, the positioning of said sensors does not affect the positioning of the other sensors, the tightness and the overall design of the measuring apparatus 1. As described in details hereinafter, these sensors can measure accurately liquid film thickness and evolution along the pipe section, in particular at the measuring section.

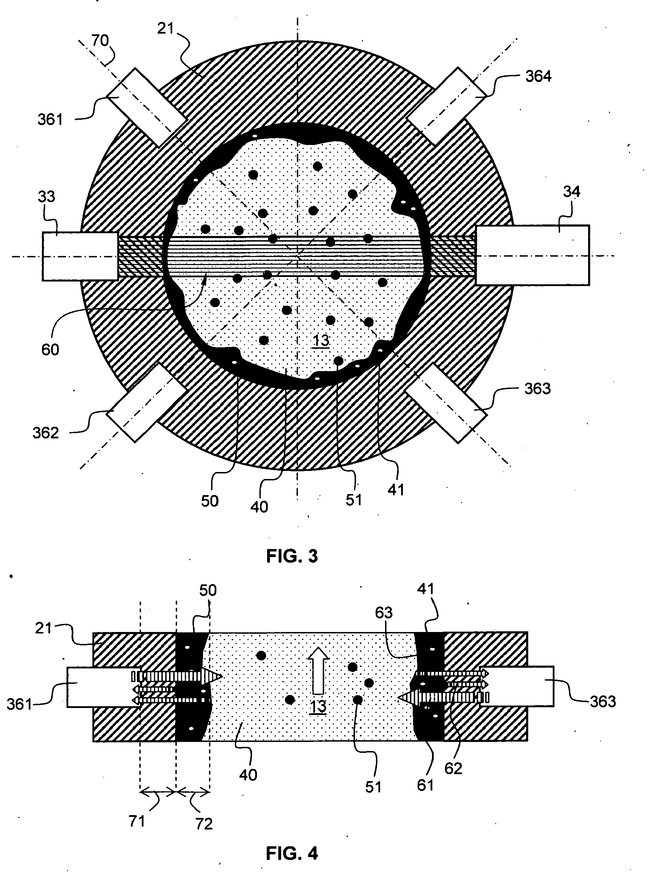

It is to be noted that, though, the pressure tappings 28, 29, the pressure sensors 31, 32, the gamma rays source 33 and detector 34, and the ultrasonic sensors 35, 36, 37, 38. have been depicted in the same plane in Figure 2, this is only for a mere drawing simplicity reason. It may be apparent for the skilled person that said entities may be positioned around the pipe section in different planes as, for example, depicted in Figure 3.

The pressure sensors 31, 32, the temperature sensor (not shown), the gamma rays detector 34, and the ultrasonic sensors 35, 36, 37, 38 are coupled to the control and data acquisition arrangement 16. An interface (not shown) may be connected between the various sensors and the control and data acquisition arrangement 16. Such an interface may comprise an analog-to-digital converter means, multiplexing means, wired or wireless communication means and electrical power means.

The control and data acquisition arrangement 16 may determine the total flowrate, the flow rates of the individual phases of the multiphase fluid mixture, the density of the multiphase fluid mixture, the temperature and other values based on measurements provided by the various sensors and detectors.

Figure 3 is a top cross-section view schematically illustrating the throat of a Venturi flow meter according to a particular embodiment of the invention. In this embodiment, four ultrasonic sensors 361, 362, 363, 364 are positioned around the throat, namely at the same crossing section as the gamma rays source 33 and the gamma rays detector 34. These sensors 361, 362, 363, 364 can measure the local film thickness. For example a mean value of the film thickness can be estimated from the measurement of the four ultrasonic sensors 361, 362, 363, 364. This estimation can be considered as a sufficiently accurate estimation of the film thickness in the gamma densitometer beam 60.

Both Figures 3 and 4 schematically illustrate a situation of high gas volume fraction GVF. In such a situation, a main wet gas stream 40 with droplets of oil and water 51 flows in the core of the pipe section 21, while a film of liquid comprising oil and water 50 with bubbles of gas 41 flows along the wall of the pipe section 21. At high gas volume fraction GVF the accuracy of gamma densitometer can dramatically decrease. A high gas volume fraction GVF of the multiphase fluid mixture is considered to be at least 90%.

Figure 4 is a side cross-section view along line 70 of Figure 3 illustrating the liquid film thickness measurement principle.

Each ultrasonic sensor 361, 363 in transmission mode produces acoustic signals (vibrations/waves) 61 which are reflected at any interface met along their paths. The reflected acoustic signals (vibrations/waves) generate echoes which are measured by the ultrasonic sensor 361, 363 in reception mode. A first reflected acoustic signal 62 results from the acoustic signals 61 being partially reflected at the interface between the pipe section wall and the liquid film 50 on the wall. A second reflected acoustic signal 63 results from the acoustic signals 61 being partially reflected at the interface between the liquid film 50 and the gas stream 40.

Thus, the acoustic signals cross firstly a thickness of metal 71 and then a thickness of liquid 72. There are not any significant or measurable echoes occurring within the gas stream 40 due to the dispersion of the acoustic signals within the gas phase. Two echoes and their attached alias due to multiple reflections are received and recorded at the ultrasonic sensor. These echoes are processed and two transition times are calculated. These transition times are converted as thickness of metal 71 and thickness of liquid 72 using densities of each material and speed of ultrasonic signal in each material.

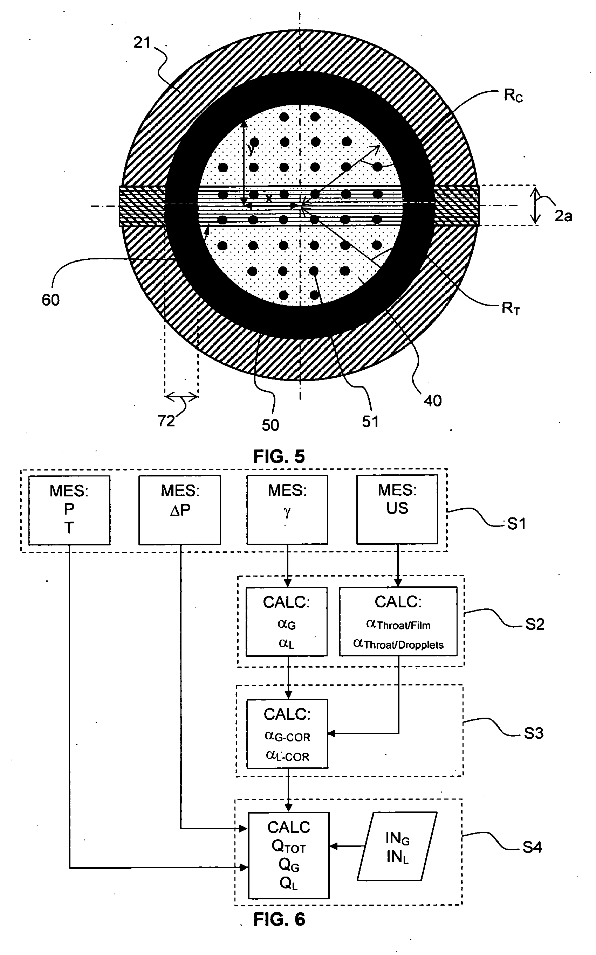

Figure 5 is a top cross-section view in the throat of a Venturi flow meter depicting a theoretical situation of high gas volume fraction GVF with liquid film on the throat wall and droplets in the throat core for the purpose of illustrating the various dimensions of the hereinafter formulae.

In the example of high gas volume fraction GVF depicted on Figure 5, the fluid mixture flowing through the Venturi throat comprises a gas core with droplets and a liquid film on the wall. The diameter of the core in this example is approximately 75% of the total throat diameter.. So assuming a pure gas core the gas fraction is about 50 % and looking at the fluid distribution within the beam limits, it can be seen that the gas core occupies much more than 50 % of the total beam area. Thus the gas fraction measured in the beam will be significantly higher than the true gas fraction in the pipe. The effect of this error is reduced when there are also droplets of liquid present in the core (as shown).

It is assumed that the film thickness 72 or a mean value of the film thickness (see the embodiment of Figure 3) is measured at the location where the fractions are measured with the gamma densitometer. The liquid film is assumed to be a perfect annulus.

Further, it is assumed for simplification reasons that the geometry is two- dimensional 2-D, i.e. the beam 60 of the gamma densitometer is represented by a

The Venturi throat has a radius $R_T$. The core which is an homogeneous mixture of gas and liquid droplets has a radius of $R_C$. The radius of the beam is a.

The area of the core (droplets + gas) within the beam $A_{BC}$ can be calculated by:

$$A_{BC} = 4 \int_0^a \sqrt{R_C^2 - x^2} \, dx \qquad (1)$$

Which can be solved as a standard integral giving:

$$A_{BC} = 4 \left[ \frac{R_C^2}{2} \left( asin \left( \frac{a}{R_C} \right) + \frac{a}{R_C^2} \sqrt{R_C^2 - a^2} \right) \right] \qquad (2)$$

Similarly the total area (core + film) within the beam $A_B$ can be calculated by:

$$A_B = 4 \int_0^a \sqrt{R_T^2 - x^2} \, dx \qquad (3)$$

Which can be solved as a standard integral giving:

$$A_B = 4 \left[ \frac{R_T^2}{2} \left( asin \left( \frac{a}{R_T} \right) + \frac{a}{R_T^2} \sqrt{R_T^2 - a^2} \right) \right] \qquad (4)$$

The area occupied by the film $A_{BC}$ is the difference of these two areas:

$$A_{BF} = A_B - A_{BC} \qquad (5)$$

This calculation assumes the core diameter is greater than the beam diameter. The area though the beam occupied by droplets is $A_{BCD}$.

The fraction of liquid measured by the gamma densitometer beam is:

$$\alpha_L = \frac{A_{BF} + A_{BCD}}{A_B} \qquad (6)$$

The area occupied by the droplets within the beam is:

$$A_{BCD} = A_B \times \alpha_L - A_{BF} \qquad (7)$$

Furthermore, it is assumed that the droplets 51 are distributed homogeneously within the core. Consequently the fraction of droplets through the beam can be considered as equivalent to the fraction of droplets over the throat area. The fraction of droplets over the throat area is:

$$\alpha_{Droplets}^{Throat} = \frac{A_{BCD}}{A_B} = \alpha_L - \frac{A_{BF}}{A_B} \tag{8}$$

The real fraction of liquid as a film over the throat wall is:

$$\alpha_{Film}^{Throat} = \frac{R_T^2 - R_C^2}{R_T^2} \tag{9}$$

Finally the real liquid fraction over the throat is:

$$\alpha_{Liquid}^{Throat} = \alpha_{Film}^{Throat} + \alpha_{Droplets}^{Throat} \doteq \alpha_L - \frac{A_{BF}}{A_B} + \frac{R_T^2 - R_C^2}{R_T^2} \tag{10}$$

Thus, knowing the dimension of the Venturi throat and the dimension of the beam (both are known with the corresponding tolerance during the manufacturing process of the measuring apparatus), and measuring the thickness of the film 72, it is possible to correct the liquid fraction, and consequently also the gas fraction, measured by the gamma densitometer.

Figure 6 schematically illustrates the method for correcting flow rate measurements of the invention.

In a first step S1, various measurements are performed as explained in details hereinbefore in relation with Figure 2, namely:

- differential pressure $\Delta P$ measurements,

- gamma attenuation y measurements,

- ultrasonic US measurements, and

- pressure P and temperature T measurements.

In a second step S2, two series of calculation are performed. Firstly, the gas fraction $\alpha_G$ and the liquid fraction $\alpha_L$ can be calculated from the attenuation measurements of the gamma densitometer. Secondly, the fraction of liquid as a film at the throat $\alpha_{Throat/Film}$, and the fraction of liquid as droplets at the throat $\alpha_{Throat/Dropplets}$ can be calculated from the ultrasonic measurements.

In a third step S3, the calculated gas fraction $\alpha_G$ and the liquid fraction $\alpha_L$ can be corrected from the calculated fraction of liquid as a film at the throat $\alpha_{Throat/Film}$, and the calculated fraction of liquid as droplets at the throat $\alpha_{Throat/Droppiets}$. Corrected gas fraction $\alpha_{G\text{-}COR}$ and liquid fraction $\alpha_{L\text{-}COR}$ are calculated.

In a fourth step S4, the total flow rate $Q_{TOT}$, the flow rate of the gas phase $Q_G$ and the flow rate of the liquid phase $Q_L$ can be calculated based on the differential pressure $\Delta P$ measurements and the corrected gas fraction $\alpha_{G\text{-}COR}$ and the liquid fraction $\alpha_{L\text{-}COR}$, respectively. Thus, the performance of the multiphase flow meter can be improved. This calculation may also take into consideration fluid properties related to the gas $IN_G$ or the liquid $IN_L$ inputs known or obtained from calibration of the measuring apparatus, and/or effect of actual pressure P and temperature T conditions of the multiphase fluid mixture during the measurements.

It should be appreciated that embodiments of the present invention are not limited to onshore hydrocarbon wells and can also be used offshore. Furthermore, although some embodiments have drawings showing a horizontal well bore and a vertical well bore, said embodiments may also apply to a deviated well bore. All the embodiments of the present invention are equally applicable to cased and uncased borehole (open hole). Although particular applications of the present invention relate to the oilfield industry, other applications to other industry, for example the mining industry or the like also apply. The apparatus of the invention is applicable to various hydrocarbon exploration and production related applications, for example permanent well monitoring applications wherein several measuring apparatuses are positioned at various locations in the well.

Though, the invention is described in conjunction with a Venturi flow meter, what is important is the generation of a pressure drop when the multiphase fluid mixture flows through the flow meter. This could also be obtained with a V-cone flow meter.

The drawings and their description hereinbefore illustrate rather than limit the present invention.

Although a drawing shows different functional entities as different blocks, this by no means excludes implementations in which a single entity carries out several functions, or in which several entities carry out a single function. In this respect, the drawings are very diagrammatic.

Any reference sign in a claim should not be construed as limiting the claim. The word "comprising" does not exclude the presence of other elements than those listed in a claim. The word "a" or "an" preceding an element does not exclude the presence of a plurality of such element.

**Claims**

1. A flow meter (1) for measuring a flow rate of a multiphase fluid mixture (13) comprising at least one gas phase (40) and one liquid phase (50), the flow meter comprising:

   - a pipe section (21) through which the multiphase fluid mixture (13) flows comprising a throat (24) between an upstream part (23) and a downstream part (25) such as to generate a pressure drop between the upstream part (23) and the downstream part (25);
   - a fraction measurement device estimating a fractional flow rate for each phase of the multiphase fluid mixture passing at the throat;

   wherein the flow meter further comprises:

   - at least one ultrasonic sensor (35, 36, 37, 38) arranged to estimate a thickness (72) of the liquid phase (50) flowing as a liquid film along a wall of the pipe section (21, 23, 24, 25), said thickness being used to correct the estimated fractional flow rate for each phase when a gas liquid fraction GLF related the multiphase fluid mixture (13) is such that the gas phase (40) flows in a core of the pipe section, and the liquid phase (50) flows along the wall of the pipe as the liquid film.

2. The flow meter according to claim 1, wherein at least one ultrasonic sensor (36) is positioned at the throat.

3. The flow meter according to claim 1 or 2, wherein at least one ultrasonic sensor (35, 36, 37, 38) is positioned at a position such as to face a zone of the pipe section where the multiphase flow mixture (13) flows according to conditions similar to the ones expected at the throat (24).

4. The flow meter according to anyone of the claims 1 to 3, wherein a plurality of ultrasonic sensor (361, 362, 363, 364) is positioned on a same plane perpendicular to the multiphase fluid mixture (13) flow direction such as to estimate a mean value of the liquid film thickness (72).

5. The flow meter according to anyone of the claims 1 to 4, wherein the ultrasonic sensor (35, 36, 37, 38) is positioned such that ultrasonic waves (61, 62, 63) propagate parallel to a beam (60) of the gamma densitometer.

6. The flow meter according to anyone of the claims 1 to 5, wherein the ultrasonic sensor (35, 36, 37, 38) is installed on a face of the pipe section not contacting the multiphase fluid mixture (13).

7. The flow meter according to anyone of the claims 1 to 6, wherein the flow meter further comprises pressure tapings (28, 29) and pressure sensors (31, 32) for measuring the differential pressure of the multiphase fluid mixture (13) between the upstream part (23) and the throat (24) and estimating a total flow rate of the multiphase fluid mixture (13).

8. The flow meter according to anyone of the claims 1 to 7, wherein the pipe section is connected at least on one end to a blind-T pipe section (20, 22).

9. The flow meter according to anyone of the claims 1 to 8, wherein the multiphase fluid mixture (13) is a hydrocarbon effluent comprising gas, oil, and water.

10. A method for measuring a flow rate of a multiphase fluid mixture (13) comprising a gas phase and a liquid phase, the flow rate measuring method comprising:

- generating a pressure drop between an upstream part (23) and a downstream part (25) by letting flow the multiphase fluid mixture (13) in a pipe section (21) having a throat (24) positioned between the upstream part (23) and the downstream part (25);
- submitting the multiphase fluid mixture (13) to gamma rays (60), measuring (S1) an absorption of the gamma rays by each phase of the multiphase fluid mixture (13) passing at the throat (24) and estimating a fractional flow rate for each phase;

wherein the flow rate measuring method further comprises:

- estimating (S2) a thickness (72) of the liquid phase (50) flowing as a liquid film along a wall of the throat (24) using ultrasonic sensors (35, 36, 37, 38); and
- correcting (S3) the estimated fractional flow rate for each phase based on said thickness (72) when a gas liquid fraction GLF related to the multiphase fluid mixture (13) is such that the gas phase (40) flows in a core of the pipe section, and the liquid phase (50) flows along the wall of the pipe as the liquid film.

11. The flow rate measuring method according to claim 10, wherein the thickness (72) is estimated at a position facing a zone of the pipe section where the multiphase flow mixture (13) flows according to conditions similar to the ones expected at the throat (24).

12. The method according to anyone of the claims 10 to 11, wherein the thickness (72) is estimated by a mean value of the liquid film thickness by means of a plurality of ultrasonic sensor (361, 362, 363, 364) positioned on a same plane perpendicular to the multiphase fluid mixture (13) flow direction.

13. The method according to anyone of the claims 10 to 12, wherein ultrasonic waves (61, 62, 63) used to estimate the thickness (72) propagate parallel to a beam (60) of the gamma densitometer.

14. The method according to anyone of the claims 10 to 13, wherein the method further comprises measuring the differential pressure of the multiphase fluid mixture between the upstream and downstream parts (23, 25) and estimating a total flow rate of the multiphase fluid mixture (13).

**FIG. 1**

**FIG. 2**

**FIG. 3**

**FIG. 4**

**FIG. 5**

**FIG. 6**

Europäisches
Patentamt

European
Patent Office

Office européen
des brevets

## EUROPEAN SEARCH REPORT

Application Number

EP 10 29 0364

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 99/10712 A1 (SCHLUMBERGER TECHNOLOGY BV [NL]; SCHLUMBERGER LTD [US]; BERARD MICHEL) 4 March 1999 (1999-03-04) * the whole document * ----- | 1-14 | INV. G01F1/74 |
| Y | Ian Atkinson et al.: "A New Horizon in Multiphase Flow Measurement", Oilfield Review Winter 2004/2005 Oilfield Review, vol. 16, no. 4 31 December 2005 (2005-12-31), pages 52-63, XP002611598, Retrieved from the Internet: URL:http://www.slb.com/~/media/Files/resou rces/oilfield_review/ors04/win04/05_multip hase_flow.ashx [retrieved on 2010-11-23] * the whole document * ----- | 1-14 | |
| Y | GB 2 447 490 A (SCHLUMBERGER HOLDINGS [VG]) 17 September 2008 (2008-09-17) * the whole document * ----- | 1-14 | |
| Y | US 2009/229375 A1 (ATKINSON IAN [GB] ET AL) 17 September 2009 (2009-09-17) * page 1 - page 7 * ----- | 1-14 | TECHNICAL FIELDS SEARCHED (IPC) G01F E21B |
| Y | WO 2004/106861 A2 (IMP COLLEGE INNOVATIONS LTD [GB]; HEWITT GEOFFREY FREDERICK [GB]; FALC) 9 December 2004 (2004-12-09) * page 1 - page 13 * ----- | 1-14 | |
| Y | WO 2009/095876 A2 (SCHLUMBERGER SERVICES PETROL [FR]; PINGUET BRUNO [FR]; CUMBE CARLOS [Q) 6 August 2009 (2009-08-06) * page 1 - page 17 * ----- | 1-14 | |

The present search report has been drawn up for all claims

| Place of search | Date of completion of the search | Examiner |
|---|---|---|
| Munich | 26 November 2010 | Fenzl, Birgit |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**ANNEX TO THE EUROPEAN SEARCH REPORT
ON EUROPEAN PATENT APPLICATION NO.**

EP 10 29 0364

This annex lists the patent family members relating to the patent documents cited in the above-mentioned European search report.
The members are as contained in the European Patent Office EDP file on
The European Patent Office is in no way liable for these particulars which are merely given for the purpose of information.

26-11-2010

| Patent document cited in search report | | | Publication date | Patent family member(s) | | Publication date |
|---|---|---|---|---|---|---|
| WO 9910712 | A1 | | 04-03-1999 | AU 748341 B2 | | 06-06-2002 |
| | | | | AU 9532498 A | | 16-03-1999 |
| | | | | DE 69816096 D1 | | 07-08-2003 |
| | | | | DZ 2592 A1 | | 22-02-2003 |
| | | | | EP 1009975 A1 | | 21-06-2000 |
| | | | | FR 2767919 A1 | | 05-03-1999 |
| | | | | US 6405604 B1 | | 18-06-2002 |
| GB 2447490 | A | | 17-09-2008 | CN 101641574 A | | 03-02-2010 |
| | | | | EA 200970859 A1 | | 26-02-2010 |
| | | | | EP 2122308 A1 | | 25-11-2009 |
| | | | | WO 2008110805 A1 | | 18-09-2008 |
| | | | | US 2008223146 A1 | | 18-09-2008 |
| US 2009229375 | A1 | | 17-09-2009 | WO 2009112834 A1 | | 17-09-2009 |
| WO 2004106861 | A2 | | 09-12-2004 | EP 1639326 A2 | | 29-03-2006 |
| | | | | US 2007095136 A1 | | 03-05-2007 |
| WO 2009095876 | A2 | | 06-08-2009 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9910712 A

- WO 0250522 A